Europäisches Patentamt

European Patent Office

Office européen des brevets

(11) Publication number: **0 185 836**
**A1**

(12) **EUROPEAN PATENT APPLICATION**

(21) Application number: 85105495.7

(22) Date of filing: 06.05.85

(51) Int. Cl.⁴: **A 01 D 45/00**

(30) Priority: 09.10.84 IT 3598

(43) Date of publication of application:
02.07.86 Bulletin 86/27

(84) Designated Contracting States:
AT BE CH DE FR GB LI LU NL SE

(71) Applicant: Truzzi, Renzo
via Marconi 29
Casalgrande (Cremona)(IT)

(72) Inventor: Truzzi, Renzo
via Marconi 29
Casalgrande (Cremona)(IT)

(74) Representative: Sassatelli, Franco
INIP via Ruggi 5
I-40137 Bologna(IT)

(54) Machine for tomatoes cropping.

㊄57 The collecting device is on a transversal frame (6) fitted on a joint to the drought pole (1) for the tractor side progression and for position adjustment; it employs two couples of rollers (17-18, 19-20) with longitudinal disposition in parallel superposition and slanting down to the ground. The underlying couple has a movement in conversion whereas the above one motion is in diversion and holds on cardan joints a pair of rollers for introduction in symmetrical disposition in grazing opening on the ground. The stalks are gradually brought in raising on the above roller couple (17-18) with diverging movement which with a tending action detaches the tomatoes. While these ones are pushed by a delimitation guard, they are discharged in a carrier, the stalks are left on the ground and dragged downwards by the pair of the below rollers (19-20) with converging movement.

./...

FIG.1

- 1 -

Machine for tomatoes cropping.

The invention refers to a machine for collecting tomatoes which are taken away by traction from the stalk, supported on the detaching means and which remains attached to the ground.

The present devices for the tomato collection foresee a cutting means which detaches the stalk allowing then the removal on transport line in sucking duct which puts on the working plane prepared in advance in different ways. On this plane, the workers separate the product from the stalk and, while this one is dichar ged on the ground, the tomatoes underlie to selecting operations for the ground discharge as well as of the leaves residues removal. This procedure which take from the ground all emerging parts of the plant, deteriorates a part of the product owing to the overstressing it underlies in the removing phase from the ground owing to the presence of stalks and leaves part.

The invention allows to reduce th product to cast off and it further avoids completely the present manual selectiong operations, by reproducing in a mechanical way the phases of the hand collection of the product consisting of the initial taking on the stalk and in detaching by traction with the other hand on the tomato. Therefore, the lack of interfering parts in the working phase allows to reduce the waste and avoids the present completing phases.

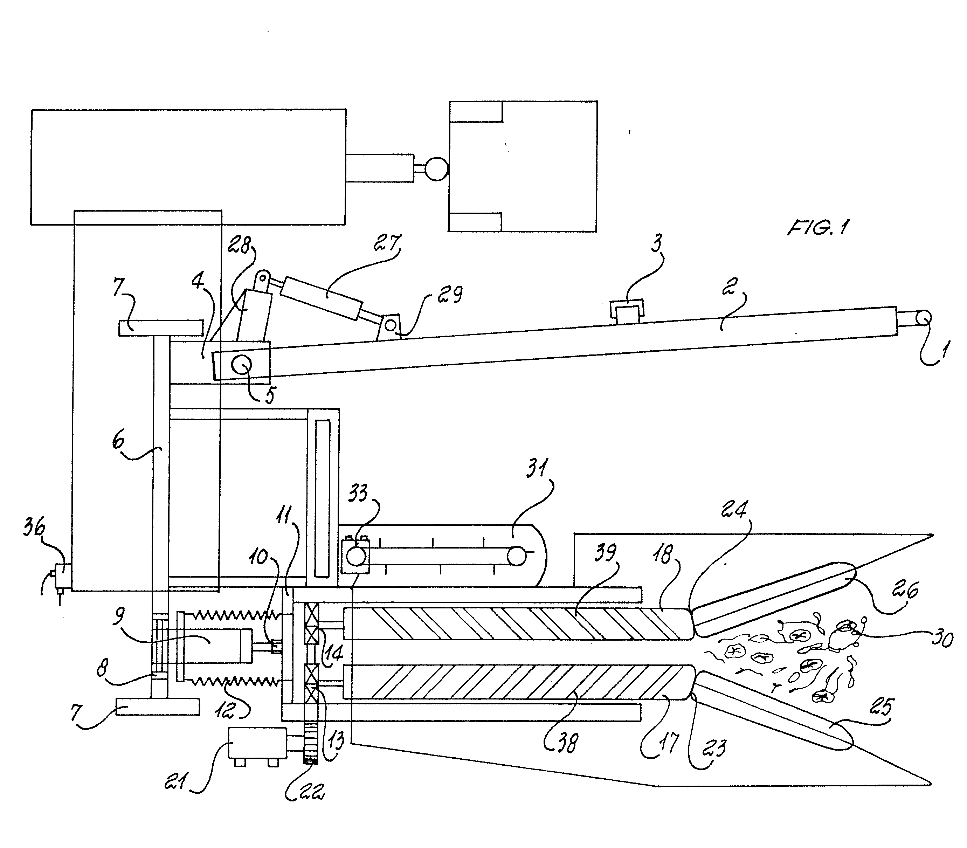

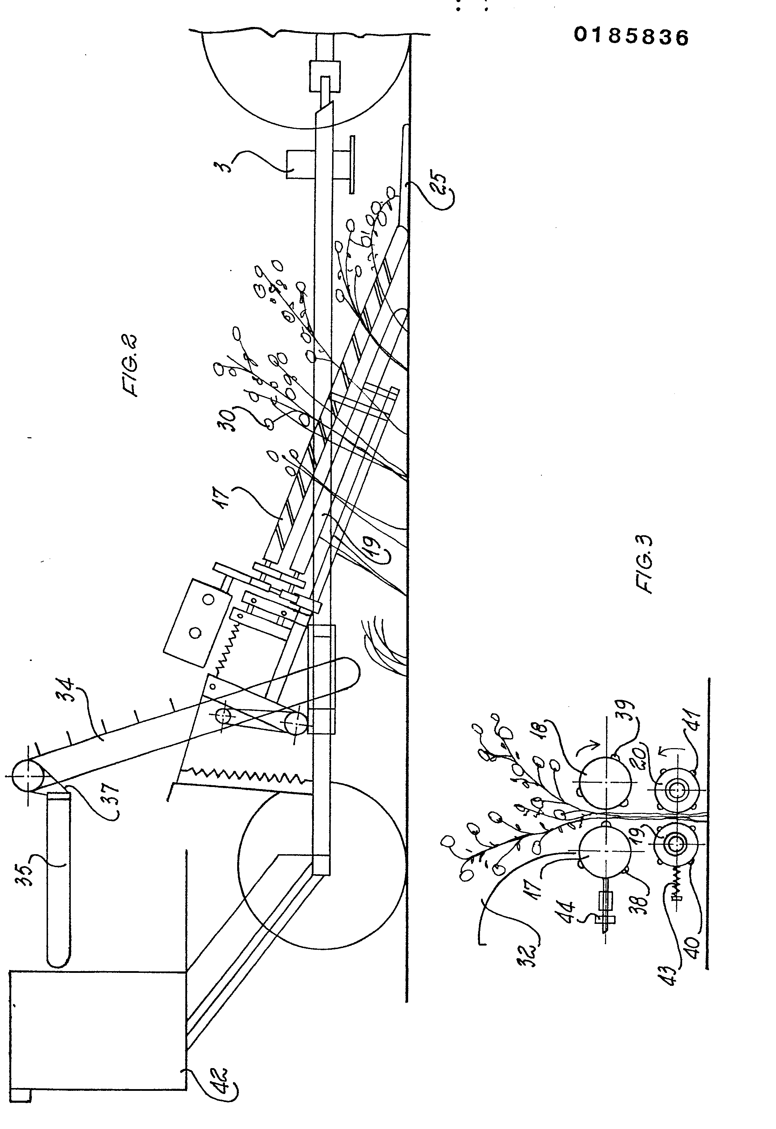

Substantially the invented device employs a collecting device fitted at the end of a transversal frame and connected on delimitating sleeve ball joint to the dragging pole to allow the side position to the tractor in operation phase, or on its back position for transit on road or small displacements in order to perform the perfect centering of the device on the field row. The collecting device employs two pairs of rollers with combined operation in order to perform the gradual hoist of the stalk at first, then the detachement of the product and at last the disengaging with an inverted movement, i.e. by lowering the stalk on the ground. These couples are fitted in longitudinal parallel superposed and slanting position. From the raised position, to enable the transport of the means, the device can be brought with the lowest end in a grazing position on the ground. The underposed pair of rollers has a conversion motion, whereas the above one has a diverging one an a cardan joints it holds a pair of rollers for introduction with symmetrical disposition in grazing opening on the ground, in order to permit the stalks to be conveyed on the collecting device while the machine is advancing. The device penetrates under the leave part of the plants and brings the stalks in gradual lifting on the above roller pair: these ones while in diverging motion carry out a tending action on the stalk still anchored in the ground. In pursuing, by means of a side tending, the tomatoes are taken off and pushed by the delimitating guard, consequently through the discharger they reach the relief transporter, while the stalks deprived of the product are left on the ground after having been dragged downwards by the lower rollers ejecting them with the converging movement of the rollers. A form of execution is given in an indicative way by the drawings of tables 1 and 2, where fig. 1 is the view of the machine from above, fig. 2 is the side view of the same dragged by the tractor, and fig. 3 is the view of the roller assembly of the collecting device with the stalk of a plant complete with leaves and tomatoes.

A form of execution foresees the dragging pole 2 fitted on connec tion 1 and supported by the leaning foot 3 in a stationing phase of the means. The dragging pole is bound in knuckle 5 which allows some displacements within the limits of beating on the side borders of the said knuckle for centering either the machine to the tractor or to set this one on the row during the employ phase. The knuckle 4 is integral on knuckle 5 with the transversal pipe frame 6 which is working as an axle for the pair of wheels 7. On the other side of the axle, the tool post 9 is supple in 8, held on a pair of ball joints 10 on fork frame 11, with a pair of retention springs 12 having a stabilizing action on the fork. On the couple of ball bearing 13 - 14 and 15 - 16, the two pairs of rollers 17 - 18 and 19 - 20 are foreseen, the first one of them -the above one- operates with a diverting motion, whereas the low er couple of rollers operates in conversion. The movement is given by the hydraulic motor 21 which acts on a cinematic chain 22. The pair of rollers 17 - 18 has the introduction rollers 25 and 26 on the connections 23 and 24 with cardan joint. For the operation, the draught pole is connected on the tractor articulation annular by introducing the pin, and the leaning foot 3 to the ground is lifted. From the central longitudinal position, the dragging pole foreseen for the transit on road, is brought by side shifting into an outside position operating by means of the hydraulic distributor on cylinder 27 joining the knuckle 4 on the projection 28 by means of the stem on the ears 29 of pole 2. At this point, the hydraulic distributors of motor 21 are
activated, and the introduction rollers 25 and 26 are in a grazing position against the ground. The plant stalks are gradually
and successively lifted by the above couple of rollers 17 - 18,
which with a diverging effect carry out a tending action and deta-
che the tomatoes 30. While these ones reach the palette transporter 31 since they are pushed back by the carter 32, the stalks
are thrown on the ground by a dragging downward action of the low
er rollers which operate with a discharging conversion. The tomatoes advance in the palette transporter 31 by means of the hydraulic motor 33 and reach the relief transporter 34 which carries them
by means of the conveyor belt 35 and discharges them into the case
of an independently operating transport means. The conveying belt
35 and the transporter 34 are synchronously operated by hydraulic
motor 36 through the transmission belt 37. The lifting and detaching rollers 17 and 18 have regular surface spiral reliefs 38 and
39 which allows to perform a screw like device which facilitated
the introduction of the stalks, while the spiral reliefs act as
side prominences for detaching the product. The below pair of rollers show a regular system of straight longitudinal reliefs 40 and
41 which act as discharging palettes.The product advancing on the
transporter 35 is selected by the workers standing on the small
square 42. The distance between the rollers of the two pairs can
be adjusted according to the working requirements. In order to
keep the below roller couple under pression, the pair of spring
43 with side disposition has been foreseen. To adjust the distan
ce of the above rollers to the working requirements a mobile
register on a guide is foressen.

0185836

Claims.

1) Machine for tomatoes cropping, characterized by the fact that employs a collecting device fitted at the end of a transversal frame and connected on delimitating sleeve ball joint to the dragging pole to allow the side position to the tractor in operation phase, or on its back position for transit on road or small displacements in order to perform the perfect centering of the device on the field row. The collecting device employs two pairs of rollers with combined operation in order to perform the gradual hoist of the stalk at first, then the detachment of the product and at last the disengaging with an inverted movement, i.e. by lowering the stalk on the ground. These couples are fitted in longitudinal parallel superposed and slanting position. From the raised position, to enable the transport of the means, the device can be brought with the lowest end in a grazing position on the ground. The underposed pair of rollers has a conversion motion, whereas the above one has a diverting one and a cardan joints it holds a pair of rollers for introduction with symmetrical disposition in grazing opening on the ground, in order to permit the stalks to be conveyed on the collecting device while the machine is advancing. The device penetrates under the leave part of the plants and brings the stalks in gradual lifting on the above roller pair: these ones while in diverging motion carry out a tending action on the stalk still anchored in the ground. In pursuing, by means of a side tending, the tomatoes are taken off and pushed by the delimitating guard, consequently through the discharger they reach the relief transporter, while the stalks deprived of the product are left on the ground after having been dragged downwards by the lower rollers ejecting them with the converging movement of the rollers.

2) Machine for tomatoes cropping, as to claim 1, characterized by the fact that the dragging pole (2) fitted on connection (1)

0185836

can be supported by the leaning foot (3) in a stationing phase of the means.

3) Machine for tomatoes cropping, as to claim 1, characterized by the fact that the lifting and detaching rollers (17 and 18) have regular surface spiral reliefs (38 and 39) which allow to perform a screw like device which facilitates the introduction of the stalks, while the spiral reliefs act as side prominences for detaching the products. The below pair of rollers show a regular system of straight longitudinal reliefs (40 and 41) which act as discharging palettes.

4) Machine for tomatoes cropping, as to claim 1, characterized by the fact that the distance between the rollers of the two pairs can be adjusted according to the working requirements.

5) Machine for tomatoes cropping, as to claim 1, characterized by the fact that in order to keep the below roller couple under pression, the pair of springs (43) with side disposition has been foreseen. To adjust the distance of the above rollers to the working requirements, a mobile register on a guide is foreseen.

FIG.1

0185836

0185836

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | FR-A-2 020 768 (FMC CORP.) <br> * figures * | 1 | A 01 D 45/00 |
| A | DE-A-1 815 745 (F. STILLE) <br> * claims; figure 1 * | 1 | |
| A | US-A-2 651 163 (J.L. AASLAND) <br> * claims; figures * | 1,3 | |
| A | US-A-2 234 447 (C. NORMAN) <br> * claims; figures * | 1,3 | |

TECHNICAL FIELDS
SEARCHED (Int. Cl.4)

A 01 D 45/00

The present search report has been drawn up for all claims

| Place of search <br> BERLIN | Date of completion of the search <br> 06-12-1985 | Examiner <br> WUNDERLICH J E |
|---|---|---|